# EUROPEAN PATENT SPECIFICATION

(11) **EP 1 683 321 B1**
(45) Date of publication and mention of the grant of the patent: **28.11.2007**
(21) Application number: 04796807.8
(22) Date of filing: 29.10.2004
(51) Int. Cl.: H04L 29/06

(54) **METHOD AND SYSTEM TO PROTECT A PROTOCOL CONTROL BLOCK FOR NETWORK PACKET PROCESSING**
VERFAHREN UND SYSTEM ZUM SCHUTZ EINES PROTOKOLLSTEUERBLOCKS FÜR DIE NETZWERK-PAKETVERARBEITUNG
PROCEDE ET SYSTEME DE PROTECTION DE BLOC DE COMMANDE DE PROTOCOLE POUR LE TRAITEMENT DE PAQUETS DE RESEAU

(30) Priority: 12.11.2003 US 712640
(43) Date of publication of application: 26.07.2006
(73) Proprietor: INTEL CORPORATION, Santa Clara, CA 95052 (US)
(72) Inventor: ILLIKKAL, Rameshkumar, Portland, OR 97229 (US)
(74) Representative: Goddar, Heinz J.
(86) International application number: PCT/US2004/036095
(87) International publication number: WO 2005/050949

(56) References cited:
- US-A1- 2002 165 992
- US-B1- 6 434 620
- MURALI RANGARAJAN ET AL: "TCP Servers: Offloading TCP Processing in Internet Servers. Design, Implementation, and Performance" TECHNICAL REPORT, March 2002 (2002-03), XP002286342 RUTGERS UNIVERSITY, DEPARTMENT OF COMPUTER SCIENCE

## Description

### BACKGROUND

### 1. Technical Field

Embodiments of the invention relate to the field of network packet processing, and more specifically to pre-fetching a protocol control block for network packet processing.

### 2. Background Information and Description of Related Art

When a packet arrives at a network device, the network interface card (NIC) takes the packet and stores it in a main memory. The NIC may then send an interrupt to notify the central processing unit (CPU) about the packet. An interrupt unit may then check the destination of the interrupt, disable further interrupts from the NIC, initiate a software interrupt, and queue the packet for processing. When the processing unit is ready to process the packet, the connection to which the packet belongs is identified. This may involve fetching a Protocol Control Block (PCB) associated with the packet. After the PCB is fetched, the CPU may start processing the packet. The memory latency that occurs from fetching the PCB when the processing unit is ready to process the packet decreases the performance of the network device. As networking speeds increase, this memory latency becomes an increasing problem for performance and throughput.

Published patent application US 2002/0165992 A1 discloses a method, system and product for improving the performance of a PCB connection. A cache is established for storing protocol control blocks (PCBs). The protocol control blocks are associated with sockets which were created in response to PCB connections. PCBs are stored in the cache. PCBs may be prioritized. High priority PCBs are stored in the PCB cache, while the low priority PCBs are stored in a linked list in a cache table.

Therefore, there is provided a method according to claim 1, an apparatus according to claim 8, a machine accessible reedable medium according to claim 14, and a system according to claim 21.

### BRIEF DESCRIPTION OF DRAWINGS

The invention may best be understood by referring to the following description and accompanying drawings that are used to illustrate embodiments of the invention. In the drawings:

**FIG. 1** is a block diagram illustrating one generalized embodiment of a system incorporating the invention.

**FIG. 2** is a block diagram illustrating an exemplary system incorporating the invention according to one embodiment of the invention.

**FIG. 3** is a flow diagram illustrating a method according to an embodiment of the invention.

**FIG. 4** is a block diagram illustrating a suitable computing environment in which certain aspects of the illustrated invention may be practiced.

### DETAILED DESCRIPTION

Embodiments of a system and method to pre-fetch a protocol control block for network packet processing are described. In the following description, numerous specific details are set forth. However, it is understood that embodiments of the invention may be practiced without these specific details. In other instances, well-known circuits, structures and techniques have not been shown in detail in order not to obscure the understanding of this description.

Reference throughout this specification to "one embodiment" or "an embodiment" means that a particular feature, structure, or characteristic described in connection with the embodiment is included in at least one embodiment of the invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

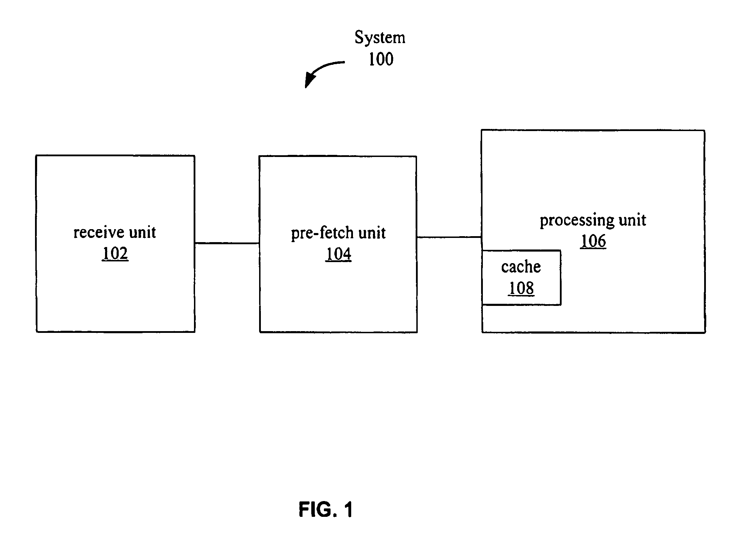

Referring to Fig. 1, a block diagram illustrates a system 100 according to one embodiment of the invention. Those of ordinary skill in the art will appreciate that the system 100 may include more components than those shown in Fig. 1. However, it is not necessary that all of these generally conventional components be shown in order to disclose an illustrative embodiment for practicing the invention.

System 100 includes a receive unit 102 to receive packets from a network. In one embodiment, the packets may be communicated in accordance with the Transmission Control Protocol (TCP/IP) specification. A particular series of packets may be referred to as a "connection" or "packet flow." The context of a connection may be stored in a structure known as a Protocol Control Block (PCB). This context may be uniquely identified by the connection's source IP address, destination IP address, source port, destination port, and/or protocol type. For each packet received at receive unit 102, the PCB associated with the packet may need to be retrieved from memory.

Accessing the PCB from the memory for each packet sent and received has associated memory latency and bandwidth issues. To reduce these issues, a pre-fetch unit 104 fetches the PCB associated with a received packet into a cache 108 of a processing unit 106. The packet is then queued for processing. When the processing unit 106 is ready to process the packet, the PCB may be retrieved from its cache 108. Thus, the memory latency in fetching the PCB when the processing unit is ready to process the packet is reduced.

In one embodiment, the pre-fetch unit 104 also pre-fetches packet header information into the cache 108. When the processing unit 106 is ready to process the packet, the packet's header information may be retrieved from the cache 108 and the packet may then be processed.

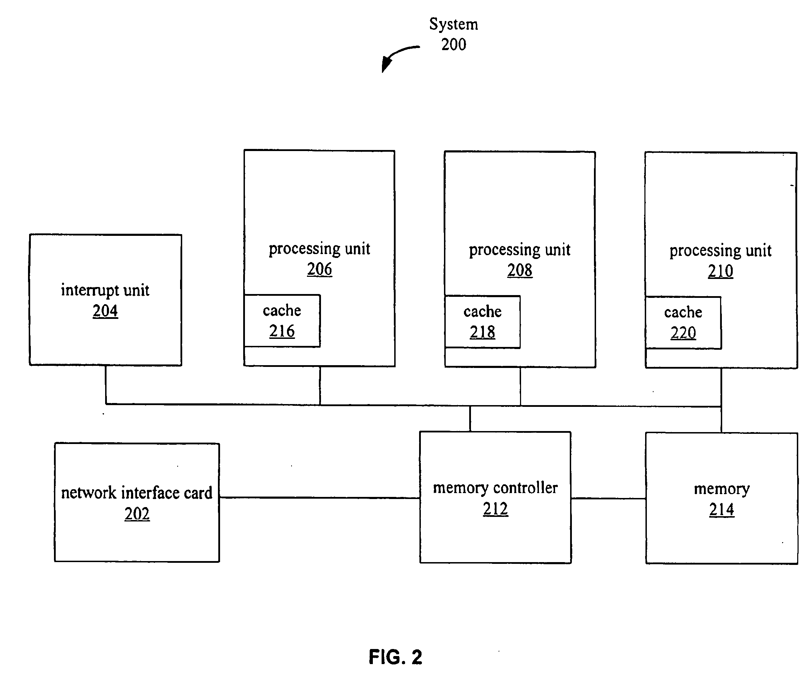

**Fig. 2** illustrates an exemplary system incorporating the invention according to one embodiment of the invention. In this embodiment, a network interface card (NIC) 202 receives packets from a network. The packet is stored in a main memory 214 through memory controller 212. The NIC 202 sends an interrupt to notify a processing unit, such as 206, 208, or 210, about the packet. An interrupt unit 204, such as an interrupt service rotate (ISR) unit, checks the destination of the interrupt, disables further interrupts from the NIC, initiates a software interrupt, and queues the packet for processing. In one embodiment, the packet is queued for processing by queuing a deferred procedure call (DPC). At this time, a pre-fetch of the PCB associated with the packet may be initiated. A pre-fetch of a packet header may also be initiated. The PCB and packet header may be pre-fetched into a cache, such as 216, 218, or 220. The pre-fetch may be done in hardware or software. When a processing unit, such as 206, 208, or 210, is ready to process the packet, the processing unit may fetch the PCB and packet header from its cache. Then, the packet may be processed. The processing unit may then enable interrupts from the NIC.

In one embodiment, pre-fetching may also be used on the send side to reduce memory latency. When a packet is queued for transmission out of the network, the PCB may be pre-fetched. There is usually some delay between the socket interface in the user space and the protocol stack processing in the kernel space. Therefore, when a send request is initiated for a packet, the PCB associated with the packet may be pre-fetched. When the kernel is ready to process the packet for transmission, the PCB has already been pre-fetched and is ready for processing. This reduces the memory latency on the send side.

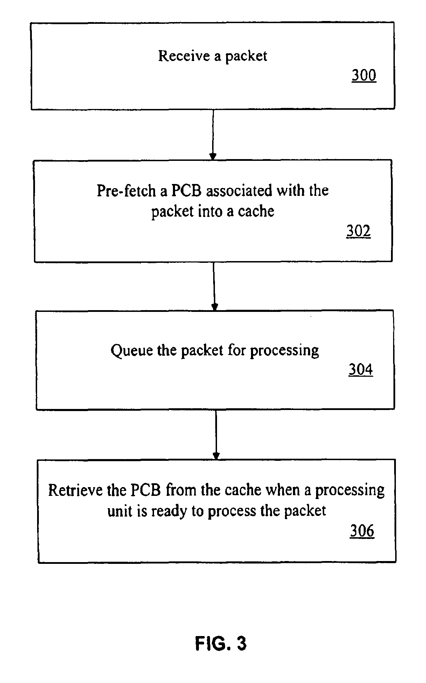

Fig. 3 illustrates a method according to one embodiment of the invention. At 300, a packet is received. At 302, a PCB associated with the packet is pre-fetched into a cache. In one embodiment, a packet header is also pre-fetched into the cache. At 304, the packet is queued for processing. At 306, when a processing unit is ready to process the packet, the PCB is retrieved from the cache. In one embodiment, the packet's header is also retrieved from the cache. Then, the packet may be processed.

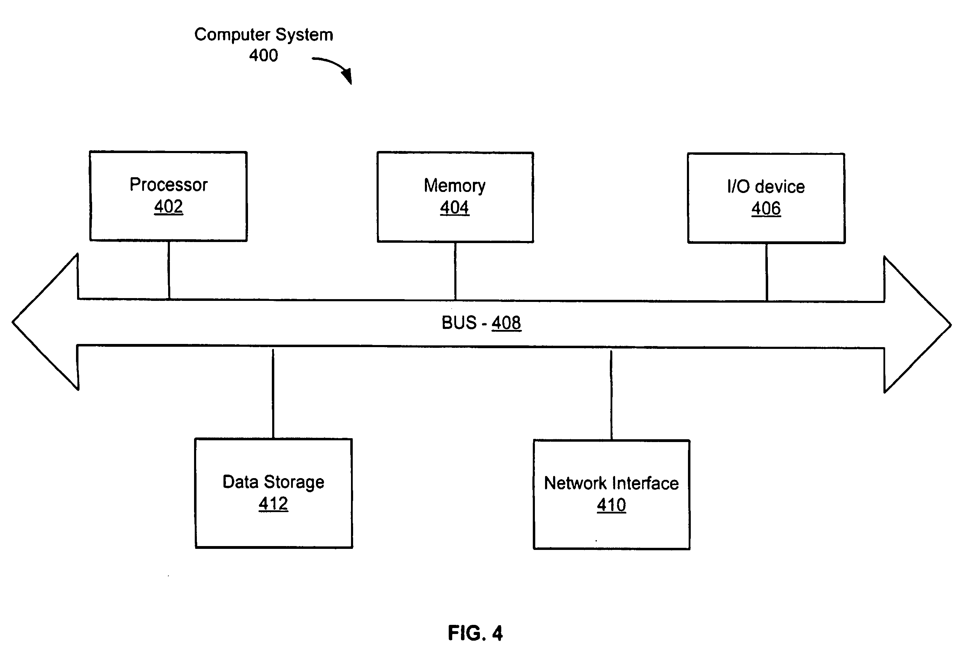

Fig. 4 is a block diagram illustrating a suitable computing environment in which certain aspects of the illustrated invention may be practiced. In one embodiment, the method described above may be implemented on a computer system 400 having components 402 - 412, including a processor 402, a memory 404, an Input/Output device 406, a data storage device 412, and a network interface 410, coupled to each other via a bus 408. The components perform their conventional functions known in the art and provide the means for implementing the system 100. Collectively, these components represent a broad category of hardware systems, including but not limited to general purpose computer systems and specialized packet forwarding devices. It is to be appreciated that various components of computer system 400 may be rearranged, and that certain implementations of the present invention may not require nor include all of the above components. Furthermore, additional components may be included in system 400, such as additional processors (e.g., a digital signal processor), storage devices, memories, and network or communication interfaces.

As will be appreciated by those skilled in the art, the content for implementing an embodiment of the method of the invention, for example, computer program instructions, may be provided by any machine-readable media which can store data that is accessible by system 100, as part of or in addition to memory, including but not limited to cartridges, magnetic cassettes, flash memory cards, digital video disks, random access memories (RAMs), read-only memories (ROMs), and the like. In this regard, the system 100 is equipped to communicate with such machine-readable media in a manner well-known in the art.

It will be further appreciated by those skilled in the art that the content for implementing an embodiment of the method of the invention may be provided to the system 100 from any external device capable of storing the content and communicating the content to the system 100. For example, in one embodiment of the invention, the system 100 may be connected to a network, and the content may be stored on any device in the network.

While the invention has been described in terms of several embodiments, those of ordinary skill in the art will recognize that the invention is not limited to the embodiments described, but can be practiced with modification and alteration within the scope of the appended claims. The description is thus to be regarded as illustrative instead of limiting.

## Claims

1. A method comprising:
receiving (300) a packet at a network device;
pre-fetching (302) a protocol control block, PCB, associated with the packet into a cache; queuing the packet for transmission; and
retrieving (306) the PCB from the cache when a processing unit is ready to process the packet for transmission.

2. The method of claim 1, further comprising pre-fetching a header associated with the packet into the cache.

3. The method of claim 2, further comprising retrieving the packet header from the cache when the processing unit is ready to process the packet.

4. The method of claim 1, further comprising sending an interrupt to notify the processing unit of the receipt of the packet.

5. The method of claim 1, wherein pre-fetching a PCB associated with the packet into a cache comprises pre-fetching a PCB associated with the packet into a cache of the processing unit.

6. The method of claim 5, further comprising storing the packet in a memory coupled to the processing unit.

7. The method of claim 1, further comprising processing the packet.

8. An apparatus comprising: a receive unit (102) adapted to receive a packet;
a pre-fetch unit (104) coupled to the receive unit and adapted to pre-fetch a protocol control block, PCB, associated with the packet into a cache and queue the packet for transmission; and
a processing unit (106) coupled to the pre-fetch unit and adapted to retrieve the PCB from the cache and process the packet for transmission.

9. The apparatus of claim 8, wherein the receive unit is a network interface card.

10. The apparatus of claim 8, wherein the pre-fetch unit is adapted to further pre-fetch a header associated with the packet into the cache.

11. The apparatus of claim 10, wherein the processing unit is adapted to further retrieve the packet header from the cache.

12. The apparatus of claim 8, wherein the pre-fetch unit adapted to pre-fetch a PCB associated with the packet into a cache comprises the pre-fetch unit adapted to pre-fetch a PCB associated with the packet into a cache of the processing unit.

13. The apparatus of claim 8, further comprising an interrupt unit coupled to the receive unit and the processing unit to receive an interrupt from the receive unit and notify the processing unit of the packet.

14. A machine accessible readable medium, comprising computer readable instructions which, when executed, causes the machine to:
receive (300) a packet;
pre-fetch (302) a protocol control block, PCB, associated with the packet into a cache; queue (304) the packet for transmission; and
retrieve (306) the PCB from the cache when a processing unit is ready to process the packet for transmission.

15. The machine accessible readable medium of claim 14, wherein the machine-accessible readable medium further includes instructions that causes the machine to pre-fetch a header associated with the packet into the cache.

16. The machine accessible readable medium of claim 15, wherein the machine-accessible readable medium further includes instructions that causes the machine to retrieve the packet header from the cache when the processing unit is ready to process the packet.

17. The machine accessible readable medium of claim 14, wherein the machine-accessible readable medium further includes instructions that causes the machine to process the packet.

18. The machine accessible readable medium of claim 14, wherein the machine-accessible readable medium further includes instructions that causes the machine to send an interrupt to notify the processing unit of the receipt of the packet.

19. The machine accessible readable medium of claim 14, wherein the machine accessible medium including instructions that when accessed by the machine causes the machine to pre-fetch a PCB associated with the packet into a cache comprises the machine accessible readable medium including instructions that when accessed by the machine causes the machine to pre-fetch a PCB associated with the packet into a cache of the processing unit.

20. The machine accessible readable medium of claim 14, wherein the machine-accessible medium further includes content that causes the machine to store the packet in a memory coupled to the processing unit.

21. A system comprising:
a receive unit (202) adapted to receive a packet;
a memory (214) coupled to the receive unit to store the received packet;
a memory controller (212) coupled to the memory to manage the memory;
a pre-fetch unit (104) coupled to the receive unit and adapted to pre-fetch a protocol control block, PCB, associated with the packet into a cache (216) and queue the packet for transmission; and
a processing unit (206) adapted to retrieve the PCB from the cache and process the packet for transmission.

22. The system of claim 21, wherein the receive unit is a network interface card.

23. The system of claim 21, wherein the pre-fetch unit is adapted to pre-fetch a header associated with the packet into the cache.

24. The system of claim 23, wherein the processing unit is adapted to retrieve the packet header from the cache.

25. The system of claim 21, further comprising an interrupt unit coupled to the receive unit and the processing unit to receive an interrupt from the receive unit and notify the processing unit of the packet.

## Patentansprüche

1. Verfahren, umfassend:
Empfangen (300) eines Pakets an einer Netzvorrichtung;
Prefetchen (302) eines Protokollsteuerblocks, PCB, der dem Paket zugeordnet ist, in einen Cache;
Stellen des Pakets in eine Warteschlange zur Übertragung;
Abrufen (306) des PCB aus dem Cache, wenn eine Verarbeitungseinheit bereit ist das Paket zur Übertragung zu verarbeiten.

2. Verfahren nach Anspruch 1, das des weiteren ein Prefetchen eines Headers, der dem Paket zugeordnet ist, in den Cache, umfaßt.

3. Verfahren nach Anspruch 2, das des weiteren ein Abrufen des Paket-Headers aus dem Cache umfaßt, wenn die Verarbeitungseinheit bereit ist, das Paket zu bearbeiten.

4. Verfahren nach Anspruch 1, das des weiteren ein Senden eines Interrupts umfaßt, um die Verarbeitungseinheit über den Empfang des Pakets zu unterrichten.

5. Verfahren nach Anspruch 1, wobei ein Prefetchen eines PCB, der dem Paket zugeordnet ist, in einen Cache, ein Prefetchen eines PCBs, der dem Paket zugeordnet ist, in einen Cache der Verarbeitungseinheit umfaßt.

6. Verfahren nach Anspruch 5, das des weiteren ein Speichern des Pakets in einem mit der Verarbeitungseinheit gekoppelten Speicher umfaßt.

7. Verfahren nach Anspruch 1, das des weiteren ein Bearbeiten des Pakets umfaßt.

8. Vorrichtung umfassend:
Eine Empfangseinheit (102), die für den Empfang eines Pakets eingerichtet ist;
eine Prefetch-Einheit (104), die mit der Empfangseinheit gekoppelt ist und eingerichtet ist, einen Protokollsteuerblock, PCB, der dem Paket zugeordnet ist, in einen Cache zu prefetchen und das Paket für eine Übertragung in eine Warteschleife zu stellen; und
eine mit der Prefetch-Einheit gekoppelte Vearbeitungseinheit (106), die dazu eingerichtet ist, den PCB vom Cache abzurufen und das Paket für eine Übertragung zu bearbeiten.

9. Vorrichtung nach Anspruch 8, wobei die Empfangseinheit eine Netzschnittstellenkarte ist.

10. Vorrichtung nach Anspruch 8, wobei die Prefetch-Einheit eingerichtet ist, des weiteren einen Header, der dem Paket zugeordnet ist, in den Cache zu prefetchen.

11. Vorrichtung nach Anspruch 10, wobei die Verarbeitungseinheit eingerichtet ist, den Paket-Header aus dem Cache abzurufen.

12. Vorrichtung nach Anspruch 8, wobei die Prefetch-Einheit, die eingerichtet ist, einen PCB, der dem Paket zugeordnet ist, in einen Cache zu prefetchen, die Prefetch-Einheit umfaßt, die eingerichtet ist, einen PCB, der dem Paket zugeordnet ist, in einen Cache der Verarbeitungseinheit zu prefetchen.

13. Vorrichtung nach Anspruch 8, die des weiteren eine Interrupt-Einheit umfaßt, die mit der Empfangseinheit und der Verarbeitungseinheit gekoppelt ist, um einen Interrupt von der Empfangseinheit zu empfangen und die Verarbeitungseinheit über das Paket zu unterrichten.

14. Maschinen-zugreifbares, lesbares Medium, das computerlesbare Instruktionen umfaßt, die wenn sie ausgeführt werden, die Maschine dazu veranlassen:
Ein Paket zu empfangen (300);
einen Protokollsteuerblock, PCB, der dem Paket zugeordnet ist, in einen Cache zu prefechen (302);
das Paket für eine Übertragung in eine Warteschleife zu setzen (304);
und den PCB aus dem Cache abzurufen (306), wenn die Verarbeitungseinheit bereit ist, das Paket für eine Übertragung zu verarbeiten.

15. Maschinen-zugreifbares, lesbares Medium nach Anspruch 14, wobei das Maschinen-zugreifbare, lesbare Medium des weiteren Befehle umfaßt, die die Maschine dazu veranlassen einen Header, der dem Paket zugeordnet ist, in den Cache zu prefetchen.

16. Maschinen-zugreifbares, lesbares Medium nach Anspruch 15, wobei das Maschinenzugreifbare, lesbare Medium des weiteren Befehle umfaßt, die die Maschine dazu veranlassen den Paket-Header aus dem Cache abzurufen, wenn die Verarbeitungseinheit bereit ist, das Paket zu bearbeiten.

17. Maschinen-zugreifbares, lesbares Medium nach Anspruch 14, wobei das Maschinenzugreifbare, lesbare Medium des weiteren Befehle umfaßt, die die Maschine dazu veranlassen, das Paket zu bearbeiten.

18. Maschinen-zugreifbares, lesbares Medium nach Anspruch 14, wobei das Maschinenzugreifbare, lesbare Medium des weiteren Befehle umfaßt, die bewirken, daß die Maschine einen Interrupt aussendet, um die Verarbeitungseinheit über den Empfang des Pakets zu unterrichten.

19. Maschinen-zugreifbares, lesbares Medium nach Anspruch 14, wobei das Maschinenzugreifbare Medium, das Befehle umfaßt, die, wenn auf sie durch die Maschine zugegriffen wird, die Maschine dazu veranlassen, einen PCB, der dem Paket zugeordnet ist, in einen Cache zu prefetchen, das Maschinen zugreifbare lesbare Medium umfaßt, das Befehle umfaßt, die, wenn darauf durch die Maschine zugegriffen wird, die Maschine veranlassen, einen PCB, der dem Paket zugeordnet ist, in einen Cache der Verarbeitungseinheit zu prefetchen.

20. Maschinen-zugreifbares, lesbares Medium nach Anspruch 14, wobei das Maschinenzugreifbare Medium des weiteren einen Inhalt umfaßt, der die Maschine dazu veranlaßt, das Paket in einem Speicher zu speichern, der mit der Verarbeitungseinheit gekoppelt ist.

21. System, umfassend:
Eine Empfangseinheit 202, die eingerichtet ist, ein Paket zu empfangen;
einen Speicher (214), der mit der Empfangseinheit gekoppelt ist, um das empfangene Paket zu speichern;
einen Speichercontroller (212), der mit dem Speicher gekoppelt ist, um den Speicher zu verwalten;
eine Prefetch-Einheit (204) die mit der Empfangseinheit gekoppelt ist und eingerichtet ist einen Protokollsteuerblock, PCB, der dem Paket zugeordnet ist, in einen Cache (216) zu prefetchen und das Paket für eine Übertragung in eine Warteschleife zu stellen;
eine Verarbeitungseinheit (206), die dazu eingerichtet ist, den PCB aus dem Cache abzurufen und das Paket für eine Übertragung zu bearbeiten.

22. System nach Anspruch 21, wobei die Empfangseinheit eine Netzschnittstellenkarte ist.

23. System nach Anspruch 21, wobei die Prefetch-Einheit eingerichtet ist, einen Header, der dem Paket zugeordnet ist, in den Cache zu prefetchen.

24. System nach Anspruch 23, wobei die Verarbeitungseinheit dazu eingerichtet ist, den Paket-Header aus dem Cache abzurufen.

25. System nach Anspruch 21, welches des weiteren eine Interrupt-Einheit umfaßt, die mit der Empfangseinheit und der Verarbeitungseinheit gekoppelt ist, um einen Interrupt von der Empfangseinheit zu empfangen und die Verarbeitungseinheit über das Pakte zu unterrichten.

## Revendications

1. Procédé comprenant les étapes consistant à :
recevoir (300) un paquet à un dispositif de réseau ;
extraire au préalable (302) un bloc de contrôle de protocole, PCB, associé au paquet, vers une mémoire cache ;
mettre en file d'attente le paquet pour l'émission ; et
récupérer (306) le PCB à partir de la mémoire cache, lorsqu'une unité de traitement est prête à traiter le paquet pour l'émission.

2. Procédé selon la revendication 1, comprenant en outre, l'extraction préalable d'un en-tête associé au paquet, vers la mémoire cache.

3. Procédé selon la revendication 2, comprenant en outre la récupération l'en-tête du paquet à partir la mémoire cache, lorsque l'unité de traitement est prête à traiter le paquet.

4. Procédé selon la revendication 1, comprenant en outre, l'envoi d'une interruption pour notifier à l'unité de traitement la réception du paquet.

5. Procédé selon la revendication 1, dans lequel l'extraction préalable d'un PCB associé au paquet vers une mémoire cache comprend l'extraction préalable d'un PCB associé au paquet vers une mémoire cache de l'unité de traitement.

6. Procédé selon la revendication 5, comprenant en outre, le stockage du paquet dans une mémoire couplée à l'unité de traitement.

7. Procédé selon la revendication 1, comprenant en outre, le traitement du paquet.

8. Dispositif comprenant :
une unité (102) de réception conçue pour recevoir un paquet ;
une unité (104) d'extraction préalable couplée à l'unité de réception et conçue pour extraire au préalable un bloc de contrôle de protocole, PCB, associé au paquet, vers une mémoire cache et pour mettre en file d'attente le paquet pour l'émission ; et
une unité (106) de traitement couplée à l'unité d'extraction préalable et conçue pour récupérer le PCB à partir de la mémoire cache et pour traiter le paquet pour l'émission.

9. Dispositif selon la revendication 8, dans lequel l'unité de réception est une carte d'interface réseau.

10. Dispositif selon la revendication 8, dans lequel l'unité d'extraction préalable est conçue pour extraire au préalable en outre, un en-tête associé au paquet, vers la mémoire cache.

11. Dispositif selon la revendication 10, dans lequel l'unité de traitement est conçue pour récupérer en outre, l'en-tête du paquet à partir de la mémoire cache.

12. Dispositif selon la revendication 8, dans lequel l'unité d'extraction préalable conçue pour extraire au préalable un PCB associé au paquet vers une mémoire cache comprend l'unité d'extraction préalable conçue pour extraire au préalable un PCB associé au paquet, vers une mémoire cache de l'unité de traitement.

13. Dispositif selon la revendication 8, comprenant en outre, une unité d'interruption couplée à l'unité de réception et à l'unité de traitement pour recevoir une interruption en provenance de l'unité de réception et pour notifier le paquet à l'unité de traitement.

14. Support lisible par une machine et accessible à celle-ci, comprenant des instructions pouvant être lues par un ordinateur qui, lorsqu'elles sont exécutées, font que la machine :
reçoive (300) un paquet ;
extraie au préalable (302) un bloc de contrôle de protocole, PCB, associé au paquet, vers une mémoire cache ;
mette en file d'attente (304) le paquet pour l'émission; et
récupère (306) le PCB à partir de la mémoire cache, lorsqu'une unité de traitement est prête à traiter le paquet pour l'émission.

15. Support lisible par une machine et accessible à celle-ci, selon la revendication 14, le support lisible par une machine et accessible à celle-ci comprenant en outre, des instructions qui font que la machine extraie au préalable un en-tête associé au paquet, vers la mémoire cache.

16. Support lisible par une machine et accessible à celle-ci, selon la revendication 15, le support lisible par une machine et accessible à celle-ci comprenant en outre, des instructions qui font que la machine récupère l'en-tête du paquet à partir de la mémoire cache, lorsque l'unité de traitement est prête à traiter le paquet.

17. Support lisible par une machine et accessible à celle-ci, selon la revendication 14, le support lisible par une machine et accessible à celle-ci comprenant en outre, des instructions qui font que la machine traite le paquet.

18. Support lisible par une machine et accessible à celle-ci, selon la revendication 14, le support lisible par une machine et accessible à celle-ci comprenant en outre, des instructions qui font que la machine envoie une interruption pour notifier à l'unité de traitement la réception du paquet.

19. Support lisible par une machine et accessible à celle-ci, selon la revendication 14, dans lequel le support accessible à une machine comportant des instructions qui, lorsque la machine y accède, font que la machine extraie au préalable un PCB associé au paquet vers une mémoire cache, comprend le support lisible par une machine et accessible à celle-ci comportant des instructions qui, lorsque la machine y accède, font que la machine extraie au préalable un PCB associé au paquet vers une mémoire cache de l'unité de traitement.

20. Support lisible par une machine et accessible à celle-ci, selon la revendication 14, le support accessible à une machine comportant en outre, un contenu qui fait que la machine stocke le paquet dans une mémoire couplée à l'unité de traitement.

21. Système comprenant :
une unité (202) de réception conçue pour recevoir un paquet ;
une mémoire (214) couplée à l'unité de réception pour stocker le paquet reçu ;
un contrôleur (212) de mémoire couplé à la mémoire pour gérer la mémoire ;
une unité (104) d'extraction préalable couplée à l'unité de réception et conçue pour extraire au préalable un bloc de contrôle de protocole, PCB, associé au paquet, vers une mémoire (216) cache et pour mettre en file d'attente le paquet pour l'émission ; et
une unité (206) de traitement conçue pour récupérer le PCB à partir de la mémoire cache et pour traiter le paquet pour l'émission.

22. Système selon la revendication 21, dans lequel l'unité de réception est une carte d'interface réseau.

23. Système selon la revendication 21, dans lequel l'unité d'extraction préalable est conçue pour extraire au préalable un en-tête associé au paquet, vers la mémoire cache.

24. Système selon la revendication 23, dans lequel l'unité de traitement est conçue pour récupérer l'en-tête du paquet à partir de la mémoire cache.

25. Système selon la revendication 21, comprenant en outre, une unité d'interruption couplée à l'unité de réception et à l'unité de traitement, pour recevoir une interruption en provenance de l'unité de réception et pour notifier le paquet à l'unité de traitement.
